# EUROPÄISCHE PATENTANMELDUNG

(11) **EP 0 835 786 A1**
(43) Veröffentlichungstag der Anmeldung: **15.04.1998**
(21) Anmeldenummer: 97116722.6
(22) Anmeldetag: 25.09.1997
(51) Int. Cl.: B60R 21/16

(54) **Gassack**

(30) Priorität: 08.10.1996 DE 29617486 U
(71) Anmelder: TRW Occupant Restraint Systems GmbH, 73551 Alfdorf (DE)
(72) Erfinder: Lang, Norbert, 73575 Leinzell (DE); Lutz, Joachim, 73579 Schechingen (DE)
(74) Vertreter: Degwert, Hartmut, Dipl.-Phys.

(57) **Zusammenfassung**

Ein Gassack mit einer Einblasöffnung enthält ein mit einer Reißlinie (5) versehenen Gewebeteil (4), das im Inneren des Gassacks (2) gegenüber dessen Einblasöffnung angeordnet ist und eine Vorentfaltungs-Kammer (6) bildet, die mit der Einblasöffnung in Strömungsverbindung steht.

## Beschreibung

Die Erfindung betrifft einen Gassack für ein Fahrzeuginsassen-Rückhaltesystem. Ein solches Rückhaltesystem besteht im wesentlichen aus einer Vorrichtung, die nach Aktivierung Druckgas bereitstellt, und einem Gassack, der ausgehend von einem zusammengefalteten, hinter einer Abdeckung verborgenen Ruhezustand mittels des Druckgases entfaltet werden kann, um bei einem Unfall eine Rückhaltewirkung für einen Fahrzeuginsassen bereitzustellen.

Gemäß der Erfindung ist ein Gassack mit einer Einblasöffnung und einem mit einer Reißlinie versehenen Gewebeteil geschaffen, das im Inneren des Gassacks gegenüber dessen Einblasöffnung angeordnet ist und eine Vorentfaltungs-Kammer bildet, die mit der Einblasöffnung in Strömungsverbindung steht. Wenn nach Aktivierung des Rückhaltesystems Druckgas in den Gassack einströmt, wird zuerst die Vorentfaltungs-Kammer gefüllt. Somit tritt der gefaltete Gassack kompakt aus der Abdeckung aus, und es können keine Kammern oder Blasen unterhalb der Abdeckung entstehen, die für das Austreten des Gassacks aus der Abdeckung nachteilig sein könnten. Sobald ein vorbestimmter Druck im Inneren der Vorentfaltungs-Kammer überschritten wird, reißt die Reißlinie auf, und der Gassack wird vollständig gefüllt.

Weitere vorteilhafte Ausgestaltungen der Erfindung ergeben sich aus den Unteransprüchen.

Die Erfindung wird nachfolgend unter Bezugnahme auf verschiedene Ausführungsformen beschrieben, die in der Zeichnung dargestellt sind. In dieser zeigen:
- Fig. 1 einen schematischen Querschnitt durch einen erfindungsgemäßen Gassack;
- Fig. 2 eine schematische Ansicht entlang der Linie II-II von Figur 1; und
- Fig. 3 schematisch eine perspektivische Ansicht des im Inneren des Gassacks angeordneten Gewebeteils.

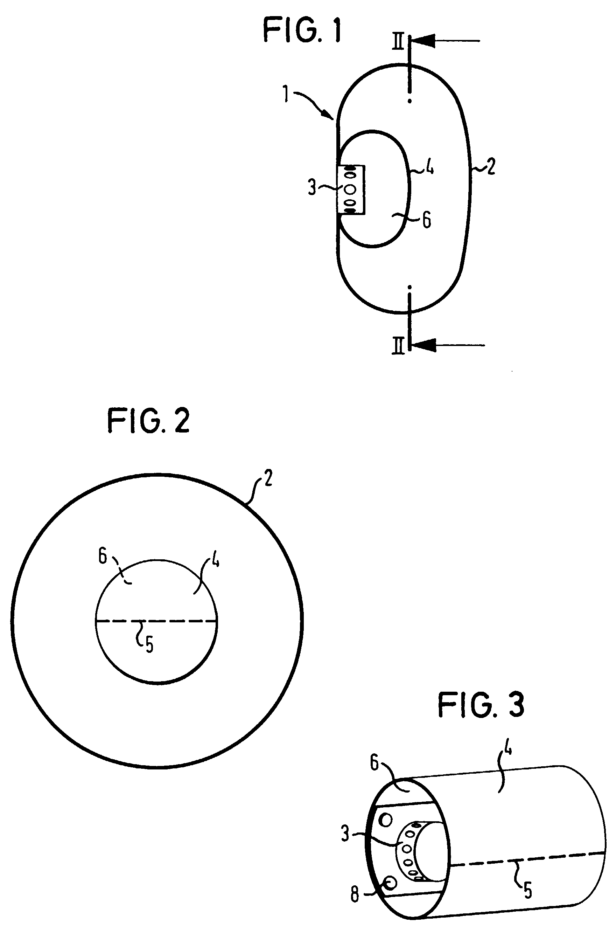

In Figur 1 ist schematisch ein Fahrzeuginsassen-Rückhaltesystem 1 dargestellt, bei dem ein erfindungsgemäßer Gassack 2 verwendet wird. Der Gassack 2 steht über seine Einblasöffnung in Strömungsverbindung mit einer Druckgasquelle 3, die nach Aktivierung Druckgas bereitstellt, um den Gassack 2 aus einem zusammengefalteten Ruhezustand zu entfalten.

Im Inneren des Gassacks 2 gegenüber der Einblasöffnung ist ein Gewebeteil 4 angeordnet, das mit einer Reißlinie 5 versehen ist (siehe Figuren 2 und 3). Das Gewebeteil 4 bildet eine Vorentfaltungs-Kammer 6.

In Figur 2 ist ein Gewebeteil 4 dargestellt, mit dem eine allseitig geschlossene Vorentfaltungs-Kammer 6 gebildet ist, die erst nach Öffnen der Reißlinie 5 mit dem Innenraum des Gassacks 2 in Strömungsverbindung steht. In Figur 3 ist dagegen ein Gewebeteil 4 dargestellt, mit dem eine schlauchartige, an zwei Enden zum Innenraum des Gassacks 2 geöffnete Vorentfaltungs-Kammer 6 gebildet ist.

Die Arbeitsweise eines erfindungsgemäßen Gassacks ist die folgende: Nach Aktivierung der Druckgasquelle 3 strömt das erzeugte Druckgas zuerst in die Vorentfaltungs-Kammer 6 ein. Im Laufe des Füllens der Vorentfaltungs-Kammer wird die (in den Figuren nicht dargestellte) Abdeckung des Gassacks geöffnet, ohne daß der eigentliche Gassack 2 bereits mit Druckgas beaufschlagt wird. Somit können keine Kammern oder Blasen unterhalb der Abdeckung entstehen, die zu einer Beschädigung der Wandung des Gassacks führen könnten. Wenn ein vorbestimmter Druck im Inneren der Vorentfaltungs-Kammer 6 erreicht ist, wird die Reißlinie 5 geöffnet, so daß der Innenraum des Gassacks 2 frei mit der Druckgasquelle 3 in Strömungsverbindung steht und der Gassack 2 wird vollständig gefüllt wird.

Das Gewebeteil 4 kann entweder mit der Wandung des Gassacks vernäht sein oder ein separates Teil sein, das in den Gassack 2 eingelegt ist. In diesem Fall kann es, wie dies in Figur 3 dargestellt ist, mittels der Befestigungsschrauben 8 für die Druckgasquelle festgelegt werden.

## Patentansprüche

1. Gassack mit einer Einblasöffnung und einem mit einer Reißlinie (5) versehenen Gewebeteil (4), das im Inneren des Gassacks (2) gegenüber dessen Einblasöffnung angeordnet ist und eine Vorentfaltungs-Kammer (6) bildet, die mit der Einblasöffnung in Strömungsverbindung steht.

2. Gassack nach Anspruch 1, dadurch gekennzeichnet, daß das Gewebeteil (4) eine allseitig geschlossene Vorentfaltungs-Kammer (6) bildet, die erst nach Öffnen der Reißlinie (5) mit dem Innenraum des Gassacks (2) in Strömungsverbindung steht.

3. Gassack nach Anspruch 1, dadurch gekennzeichnet, daß das Gewebeteil (4) eine schlauchartige, an zwei Enden zum Innenraum des Gassacks (2) geöffnete Vorentfaltungs-Kammer (6) bildet.

4. Gassack nach einem der vorhergehenden Ansprüche, dadurch gekennzeichnet, daß das Gewebeteil (4) mit dem Gassack (2) vernäht ist.

5. Gassack nach einem der vorhergehenden Ansprüche, dadurch gekennzeichnet, daß das Gewebeteil (4) ein in den Gassack (2) eingelegtes separates Teil ist.
